# EUROPÄISCHE PATENTANMELDUNG

(11) **EP 3 699 722 A1**
(43) Veröffentlichungstag der Anmeldung: **26.08.2020**
(21) Anmeldenummer: 19158654.4
(22) Anmeldetag: 21.02.2019
(51) Int. Cl.: G06F 1/04

(54) **VERFAHREN UND SYSTEM ZUM AUSFÜHREN EINER APPLIKATION AUF EINEM FELDGERÄT**

(71) Anmelder: Siemens Aktiengesellschaft, 80333 München (DE)
(72) Erfinder: Falk, Rainer, 85586 Poing (DE); Fischer, Kai, 85598 Baldham (DE); Fries, Steffen, 85598 Baldham (DE); Furch, Andreas, 85354 Freising (DE); Heintel, Markus, 81377 München (DE); Papagudi Subrahmanyam, Niranjana, 81829 München (DE); Sel, Tolga, 80809 München (DE)

(57) **Zusammenfassung**

Die Erfindung betrifft ein System zum Ausführen einer Applikation oder mehrerer Applikationen, wobei mittels einer applikationsspezifischen Zeitsynchronisationskonfiguration einer Applikation spezifisch für die Applikation ein entsprechender Zeitgeber ausgewählt wird, um für eine Ausführung der Applikation eine Zeitsynchronisation zu realisieren.

## Beschreibung

Die Erfindung bezieht sich auf ein Verfahren und ein System zum Ausführen einer Applikation auf einem Feldgerät. Das Feldgerät kann beispielsweise ein Steuergerät oder ein IoT-Gerät eines industriellen Automatisierungssystems sein.

Nachfolgend werden Aspekte der Erfindung erläutert.

Gemäß einem ersten Aspekt betrifft die Erfindung ein System zum Ausführen einer Applikation aufweisend:
- ein Lademodul, wobei
   ∘ das Lademodul zum Laden einer ersten Applikation eingerichtet ist,
   ∘ der ersten Applikation eine erste
   applikationsspezifische Zeitsynchronisationskonfiguration zugeordnet ist und/oder die erste Applikation die erste applikationsspezifische Zeitsynchronisationskonfiguration umfasst,
   ∘ beispielsweise die erste applikationsspezifische Zeitsynchronisationskonfiguration Anforderungen für eine Ausführung der ersten Applikation vorgibt,
   ∘ beispielsweise die Anforderungen vorgeben, auf welcher Zeitbasis und/oder mit welcher Genauigkeit eine Zeitsynchronisation bei einer Ausführung der ersten Applikation erfolgen soll;
- ein Zeitgeber oder mehrere Zeitgeber, die beispielsweise jeweils eine Zeitgeberkonfiguration umfassen;
- ein Steuerungsmodul, wobei
   ∘ das Steuerungsmodul dazu eingerichtet ist, dass anhand der ersten applikationsspezifischen Zeitsynchronisationskonfiguration einer der Zeitgeber ausgewählt wird,
   ∘ das Steuerungsmodul dazu eingerichtet ist, mittels des ausgewählten Zeitgebers eine Zeitsynchronisation für eine Ausführung der ersten Applikation durchzuführen und/oder zu steuern,
   ∘ beispielsweise beim Auswählen des Zeitgebers anhand der ersten applikationsspezifischen Zeitsynchronisationskonfiguration die Zeitgeberkonfiguration berücksichtigt wird.

Das Laden einer Applikation kann beispielsweise aus einem lokalen Speichermodul oder über ein Datenkommunikationsnetzwerk erfolgen.

Gemäß einem weiteren Aspekt betrifft die Erfindung ein System zum Ausführen einer ersten Applikation und einer zweiten Applikation aufweisend:
- ein Lademodul, wobei
   ∘ das Lademodul zum Laden einer ersten Applikation und/oder einer zweiten Applikation eingerichtet ist,
   ∘ der ersten Applikation eine erste applikationsspezifische Zeitsynchronisationskonfiguration zugeordnet ist und/oder die erste Applikation die erste applikationsspezifische Zeitsynchronisationskonfiguration umfasst,
   ∘ beispielsweise die erste applikationsspezifische Zeitsynchronisationskonfiguration Anforderungen für eine Ausführung der ersten Applikation vorgibt,
   ∘ beispielsweise die Anforderungen vorgeben, auf welcher Zeitbasis und/oder mit welcher Genauigkeit eine Zeitsynchronisation bei einer Ausführung der ersten Applikation erfolgen soll;
   ∘ beispielsweise der zweiten Applikation eine zweite applikationsspezifische Zeitsynchronisationskonfiguration zugeordnet ist und/oder die zweite Applikation die zweite applikationsspezifische Zeitsynchronisationskonfiguration umfasst,
   ∘ beispielsweise die zweite applikationsspezifische Zeitsynchronisationskonfiguration Anforderungen für eine Ausführung der zweiten Applikation vorgibt,
   ∘ beispielsweise die Anforderungen vorgeben, auf welcher Zeitbasis und/oder mit welcher Genauigkeit eine Zeitsynchronisation bei einer Ausführung der zweiten Applikation erfolgen soll;
- mehrere Zeitgeber, die beispielsweise jeweils eine Zeitgeberkonfiguration umfassen;
- ein Steuerungsmodul, wobei
   ∘ das Steuerungsmodul dazu eingerichtet ist, dass anhand der ersten applikationsspezifischen Zeitsynchronisationskonfiguration einer der Zeitgeber (z. B. ein erster Zeitgeber) ausgewählt wird,
   ∘ das Steuerungsmodul dazu eingerichtet ist, mittels des ausgewählten Zeitgebers eine Zeitsynchronisation für eine Ausführung der ersten Applikation durchzuführen und/oder zu steuern,
   ∘ beispielsweise beim Auswählen des Zeitgebers anhand der ersten applikationsspezifischen Zeitsynchronisationskonfiguration die Zeitgeberkonfiguration berücksichtigt wird.
   ∘ das Steuerungsmodul dazu eingerichtet ist, dass anhand der zweiten applikationsspezifischen Zeitsynchronisationskonfiguration ein weiterer der Zeitgeber (z. B. ein zweiter Zeitgeber) ausgewählt wird,
   ∘ beispielsweise das Steuerungsmodul dazu eingerichtet ist, mittels des ausgewählten weiteren Zeitgebers eine Zeitsynchronisation für eine Ausführung der zweiten Applikation durchzuführen und/oder zu steuern,
   ∘ beispielsweise beim Auswählen des weiteren Zeitgebers anhand der zweiten applikationsspezifischen Zeitsynchronisationskonfiguration die Zeitgeberkonfiguration berücksichtigt wird.

Die erste applikationsspezifische Zeitsynchronisationskonfiguration und die zweite applikationsspezifische Zeitsynchronisationskonfiguration sind dabei vorzugsweise unterschiedlich oder verschieden voneinander.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computerimplementiert" zu verstehen.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, dass der Prozessor Funktionen ausführt, um das erfindungsgemäße Verfahren oder einen Schritt des erfindungsgemäßen Verfahrens zu implementieren oder realisieren. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", "aufweisen" und dergleichen, insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter einer "Applikation" und dergleichen kann im Zusammenhang mit der Erfindung beispielsweise eine App, ausführbarer Programmcode oder Programmbefehle verstanden werden. Beispielsweise werden mittels der Applikation bzw. den Programmbefehlen oder dem Programmcode ein Prozessor derart konfiguriert, dass z. B. die Steuerung eines Automatisierungssystems realisiert wird. Hierzu können z. B. mehrere Geräte (z. B. das System und/oder weitere Geräte wie Fertigungsmaschinen, Feldgeräte etc.) des Automatisierungssystems angesteuert werden, wobei insbesondere bei einer Applikation zur Gerätesteuerung häufig eine Zeitsynchronisation erforderlich ist, um z. B. einen korrekten Ablauf des Automatisierungssystems zu gewährleisten. Im Kontext der Erfindung bedeutet zudem "applikationsspezifisch", dass beispielsweise ein entsprechenes Datum spezifisch für eine entsprechende Applikation und/oder den Kontext, in dem eine entsprechende Applikation verwendet wird, erzeugt und/oder zugeordnet wurde, um z. B. spezifisch für eine entsprechende Applikation oder einen Kontext eine Konfiguration bereitzustellen.

Die Erfindung ist dahingehend vorteilhaft, dass beispielsweise ein einzelnes Gerät (z. B. ein Gerät einer Edge Cloud, Cloud-Plattform, App-enabled Field Device, Steuergerät mit Unterstützung von nachladbaren Apps) zur Ausführung von Applikationen für Echtzeit-Applikationen verwendet werden kann, wobei insbesondere die jeweiligen Applikationen (z. B. die erste Applikation) unterschiedlich synchronisierte Zeitinformationen benötigen. Beispielsweise können manche Applikationen (z. B. die erste Applikation) eine lokal innerhalb eines verteilten Automatisierungssystems synchronisierte Zeitinformation verwenden, andere dagegen können beispielsweise eine Absolutzeit verwenden. Weiterhin können beispielsweise auf einem (Edge) Cloud Server Steuerungsapplikationen (z. B. die erste Applikation) ausgeführt werden, die unterschiedlichen Automatisierungssystemen zugeordnet sind. Diese unterschiedlichen Automatisierungssysteme können z. B. jeweils eine eigene Zeitinformation verwenden. Die entsprechende Zeitinformation wird beispielsweise der ersten Applikation bei der Zeitsynchronisation z. B. als Datensatz bereitgestellt (z. B. durch das Steuerungsmodul). Eine entsprechende Bereitstellung kann beispielsweise über eine Datenschnittstelle erfolgen, die mittels der ersten applikationsspezifischen Zeitsynchronisationskonfiguration derart konfiguriert ist, dass die Zeitsynchronisation und/oder das Bereitstellen der Zeitinformation für die erste Applikation erfolgen kann. Bei dem System zum Ausführen einer Applikation kann es sich beispielsweise um eine Vorrichtung, einen Prozessor, ein Hostsystem, einen Cloud-Service, ein Feldgerät, ein Embedded System, einen FPGA oder eine Ausführungsumgebung handeln, wobei ein Gerät, ein Feldgerät oder ein Embedded System die Ausführungsumgebung umfasst.

Mittels der Erfindung kann insbesondere für echtzeitkritische Steuerungssysteme eine Zeitsynchronisation verbessert werden. Umfasst das System z. B. eine Software-basierte Ausführungsumgebung mit einer Mehrzahl von unabhängigen Applikationen (z. B. Java Bundle, Container Image, Virtual Machine Image) können z. B. auch echtzeitkritische Applikationen auf dem System ausgeführt werden. Dies ist beispielsweise bei einer Echtzeit-basierten Cloud (cloud robotics), bei Edge Cloud in industriellen Umgebungen, und bei App-enabled Field Devices vorteilhaft.

Mittels der Erfindung werden beispielsweise beim Steuern der Ausführung der ersten Applikation entsprechende Informationen (z. B. Zeitinformationen) bereitgestellt, die die Ausführung der ersten Applikation synchronisieren und/oder die Zeitsynchronisation für die erste Applikation durchführen (z. B. wann sie durch den Scheduler aktiviert wird). Alternativ oder zusätzlich wird mittels der Zeitsynchronisation gesteuert, wann der ersten Applikation eine empfangene Nachricht zur Bearbeitung bereitgestellt wird und/oder wann eine durch die erste Applikation gebildete Nachricht gesendet wird.

Bei weiteren Ausführungsformen des Systems gibt die erste applikationsspezifische Zeitsynchronisationskonfiguration für die Zeitsynchronisation beispielsweise folgendes vor:
- eine zu verwendende Zeitquelle und/oder
- ein Zeitsynchronisationsprotokoll und/oder
- eine Genauigkeit der Zeitsynchronisation und/oder
- eine kryptographische Schutzstufe des Zeitsynchronisationsprotokolls.

Bei weiteren Ausführungsformen des Systems umfasst die erste applikationsspezifische Zeitsynchronisationskonfiguration eine Applikationskontextkonfiguration.

Bei weiteren Ausführungsformen des Systems gibt die Applikationskontextkonfiguration vor, in welchem Kontext die erste applikationsspezifische Zeitsynchronisationskonfiguration verwendet wird.

Das System ist dahingehend vorteilhaft, wenn beispielsweise mehrere unterschiedliche Applikationen (z. B. die erste Applikation, eine zweite Applikation und/oder weitere Applikationen) unterschiedliche Anforderungen an die Zeitsynchronisation haben, z. B. wie genau und bezogen auf welche Zeitbasis die Zeitsynchronisation erfolgen soll. So kann es beispielsweise bei Cloud-basierten Anwendungen vorkommen, dass z. B. die erste Applikation synchron zur Zeit einer ersten industriellen Anwendung (kann beispielsweise auch als erste industrielle Applikation bezeichnet werden) sein muss, wogegen z. B. eine zweite Applikation synchron zur Zeit einer zweiten industriellen Anwendung (kann beispielsweise auch als zweite industrielle Applikation bezeichnet werden) sein muss. Es ist beispielsweise auch möglich, dass die erste Applikation die zwei unterschiedlichen industriellen Anwendungen bedient. Diese entsprechenden Anforderungen werden in der Applikationskontextkonfiguration kodiert bzw. gespeichert und das Steuerungsmodul steuert abhängig von dem Kontext, in dem die erste Applikation ausgeführt wird, z. B. zunächst die Zeitsynchronisation für die erste industrielle Anwendung und weiterhin oder anschließend die Zeitsynchronisation für die zweite industrielle Anwendung. Herkömmliche Realisierungen einer Zeitsynchronisation, die die lokale Zeit eines Hostrechners synchronisieren, sind für solche Anwendungsszenarien ungeeignet. Mit anderen Worten gibt die Applikationskontextkonfiguration an, wann die entsprechende erste applikationsspezifische Zeitsynchronisationskonfiguration gültig ist oder welcher Teil der ersten applikationsspezifischen Zeitsynchronisationskonfiguration für welchen Kontext gültig ist. Beispielsweise kann die Applikationskontextkonfiguration vorgeben, dass abhängig vom Betriebszustand (der Betriebszustand entspricht dabei beispielsweise einem Kontext) des Systems und/oder der ersten Applikation ein für diesen Betriebszustand/Kontext vorgegebener Teil der ersten applikationsspezifischen Zeitsynchronisationskonfiguration für die Zeitsynchonisation der ersten Applikation verwendet wird bzw. anhand dieser ein entsprechender Zeitgeber ausgewählt wird.

Bei weiteren Ausführungsformen des Systems umfasst die erste applikationsspezifische Zeitsynchronisationskonfiguration eine Zeitgeberkonfiguration, wobei beispielsweise die Zeitgeberkonfiguration einen der Zeitgeber des Systems konfiguriert oder erzeugt, und wobei beispielsweise der konfigurierte oder erzeugte Zeitgeber spezifisch durch die erste Applikation oder weitere Applikationen erzeugt wurde.

Das System ist dahingehend vorteilhaft, um beispielsweise eine oder mehrere eigene Host-lokale Zeitsynchronisationen mittels eines entsprechend konfigurierten Zeitgebers einzurichten oder zu konfigurieren (z. B. Zeitsynchronisationsprotokoll, Synchronisationsrechner, Credentials). Dies kann z. B. über ein Manifest erfolgen, das z. B. als Teil der ersten applikationsspezifischen Zeitsynchronisationskonfiguration des Applikations-Pakets geladen wird, oder zur Laufzeit durch API-Aufrufe. Beispielsweise kann ein entsprechendes Manifest auch die erste applikationsspezifische Zeitsynchronisationskonfiguration umfassen.

Bei weiteren Ausführungsformen des Systems umfasst das System ein Zeitkorrekturmodul, wobei beispielsweise das Zeitkorrekturmodul dazu eingerichtet ist, der ersten Applikation einen systemspezifischen Zeitkorrekturwert bereitzustellen, wobei beispielsweise der systemspezifische Zeitkorrekturwert spezifisch für das System berechnet wird, und/oder beispielsweise der systemspezifische Zeitkorrekturwert spezifisch für einen oder mehrere der Zeitgeber berechnet wird.

Bei weiteren Ausführungsformen des Systems umfasst das System ein Kommunikationsmodul, wobei beispielsweise das Kommunikationsmodul dazu eingerichtet ist, ein Prüf-ergebnis zu berechnen, das angibt, ob die erste applikationsspezifische Zeitsynchronisationskonfiguration und eine zweite applikationsspezifische Zeitsynchronisationskonfiguration einer zweiten Applikation kompatibel sind, wobei beispielsweise das Kommunikationsmodul dazu eingerichtet ist abhängig von dem Prüfergebnis eine Kommunikationsverbindung zwischen der ersten Applikation und der zweiten Applikation aufzubauen.

Das System ist dahingehend vorteilhaft, dass beispielsweise zwei Applikationen Nachrichten austauschen können. Dazu kann das System (z. B. als Ausführungsumgebung für Applikationen realisiert) einen Interprozesskommunikationsmechanismus (IPC, inter-process communication) bereitstellen oder umfassen. Dies kann z. B. durch eine Message/Event Queue realisiert sein. Mittels der Ausführungsform kann z. B. eine zeitsynchronisierte IPC-Kommunikation erfolgen zwischen der ersten Applikation und der zweiten Applikation, wenn sie z. B. die gleiche lokale Zeitinformation verwenden oder kompatible applikationsspezifische Zeitsynchronisationskonfigurationen aufweisen. Eine solche zeitsynchronisierte IPC-Kommunikation kann z. B. zwischen zwei Applikationen, die beispielsweise nicht die gleiche Zeitbasis verwenden, nicht bereitgestellt werden - hierbei sind z. B. die entsprechenden applikationsspezifischen Zeitsynchronisationskonfigurationen inkompatibel zueinander. Dadurch wird beispielsweise verhindert, dass zwei Realtime-Apps, die z. B. nicht die gleiche Zeitbasis verwenden, versehentlich Echtzeitdaten austauschen unter der Annahme sie wären zeitsynchronisiert.

Bei weiteren Ausführungsformen des Systems führt das Steuerungsmodul die erste Applikation aus, wenn Anforderungen der ersten applikationsspezifischen Zeitsynchronisationskonfiguration für die erste Applikation eingehalten werden, wobei beispielsweise während der Ausführung der ersten Applikation die Anforderungen wiederholt überprüft werden, wobei beispielsweise für das wiederholte Überprüfen der Anforderungen ein Prüfergebnis ermittelt wird, wobei beispielsweise abhängig von diesem Prüfergebnis eine fortgesetzte Ausführung der ersten Applikation gesteuert wird.

Gemäß einem weiteren Aspekt betrifft die Erfindung ein computerimplementiertes Verfahren zum Ausführen mit den Verfahrensschritten:
- Laden einer ersten Applikation, wobei
   ∘ der ersten Applikation eine erste applikationsspezifische Zeitsynchronisationskonfiguration zugeordnet ist und/oder die erste Applikation die erste applikationsspezifische Zeitsynchronizationskonfiguration umfasst;
- Auswählen eines Zeitgebers anhand der ersten applikationsspezifischen Zeitsynchronizationskonfiguration, wobei mittels des ausgewählten Zeitgebers eine Zeitsynchronisation für eine Ausführung der ersten Applikation durchzuführen und/oder zu steuern ist.

Das Laden einer Applikation kann beispielsweise aus einem lokalen Speichermodul oder über ein Datenkommunikationsnetzwerk erfolgen.

Bei weiteren Ausführungsformen des Verfahrens umfasst das Verfahren weitere Verfahrensschritte, um die funktionalen Merkmale oder um weitere Merkmale des Systems bzw. dessen Ausführungsformen zu realisieren.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass das genannte erfindungsgemäße System erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es das erfindungsgemäße System erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung.

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware (komponenten) oder ausschließlich per Software (komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne, dass dies expliziert in dem jeweiligen Ausführungsbeispiel genannt sein muss.

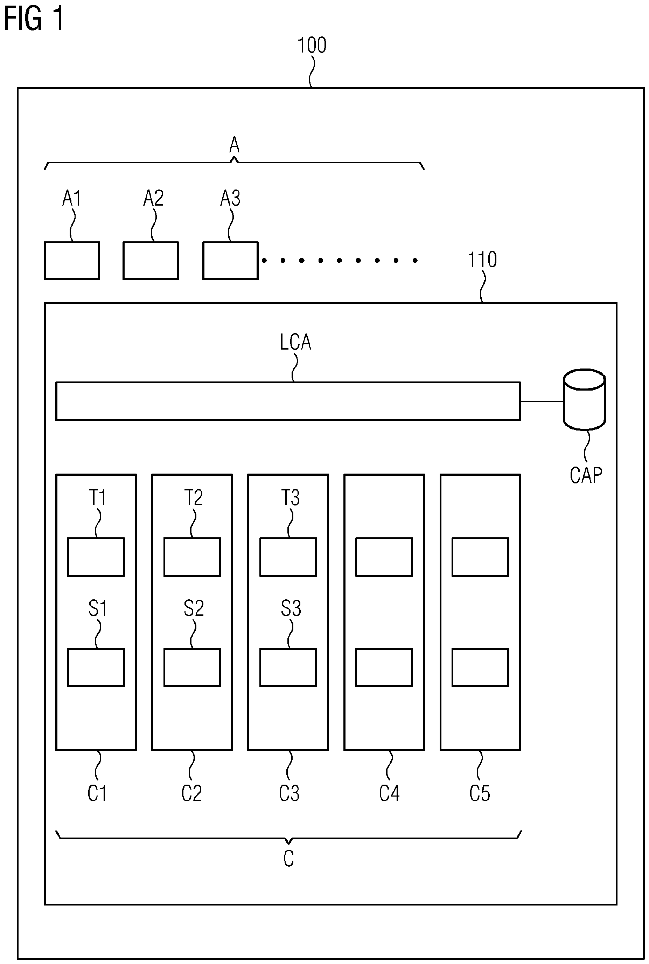

Fig. 1 zeigt dabei ein System 100 (z. B. ein Feldgerät). Das System 100 umfasst mehrere Applikationen A, z. B. eine erste Applikation A1, eine zweite Applikation A2 und eine dritte Applikation A3. Die jeweiligen Applikationen A umfassen jeweils eine applikationsspezifische Zeitsynchronisationskonfiguration und/oder einer jeweiligen Applikation A ist eine applikationsspezifische Zeitsynchronisationskonfiguration zugeordnet. Eine Zeitsynchronisationskonfiguration ist dabei vorzugsweise in einer ladbaren App-Datei (z.B. eine Archivdatei, Bundle) enthalten. Auch können weitere Applikationen (nicht dargestellt) vorliegen, die über keine applikationsspezifische Zeitsynchronisationskonfiguration verfügen (nicht dargestellt).

Beispielsweise ist der ersten Applikation A1 eine erste applikationsspezifische Zeitsynchronisationskonfiguration zugeordnet und/oder die erste Applikation A1 umfasst die erste applikationsspezifische Zeitsynchronisationskonfiguration. Beispielsweise ist der zweiten Applikation A2 eine zweite applikationsspezifische Zeitsynchronisationskonfiguration zugeordnet und/oder die zweite Applikation A2 umfasst die zweite applikationsspezifische Zeitsynchronisationskonfiguration. Beispielsweise ist der dritten Applikation A3 eine dritte applikationsspezifische Zeitsynchronisationskonfiguration zugeordnet und/oder die dritte Applikation A3 umfasst die dritte applikationsspezifische Zeitsynchronisationskonfiguration.

Die entsprechende applikationsspezifische Zeitsynchronisationskonfiguration für eine Applikation A kann beispielsweise bei der Installation der Applikation A festgelegt werden. Beispielsweise wird die Zeitsynchronisationskonfiguration automatisiert durch das System 100 bestimmt. Sie gibt an, welche Anforderungen an die Zeitsynchronisation für die Applikation notwendig sind. Alternativ ist die applikationsspezifische Zeitsynchronisationskonfiguration bereits vorhanden, durch eine Policy vorgegeben oder von der entsprechenden Applikation umfasst bzw. in dieser gespeichert.

Zusätzlich umfasst das System 100 mehrere Zeitgeber C, z. B. einen ersten Zeitgeber C1, einen zweiten Zeitgeber C2, einen dritten Zeitgeber C3, einen vierten Zeitgeber C4 und einen fünften Zeitgeber C5. Zusätzlich umfasst das System 100 ein Lademodul, ein Steuerungsmodul 110 (z. B. eine Ausführungsumgebung für die Applikation), ein optionales Zugriffssteuerungsmodul LCA und ein optionales Zugriffsregelspeichermodul CAP.

In Fig. 1. umfasst das Steuerungsmodul 110 das Zugriffssteuerungsmodul LCA, das Lademodul, , das Zugriffsregelspeichermodul CAP und die Zeitgeber C. In anderen Varianten können die jeweiligen Module z. B. auch außerhalb des Steuerungsmoduls 110 angeordnet sein.

Die Zeitgeber C können z. B. als lokale Uhren des Systems 100 realisiert sein. Diese können zumindest zum Teil z. B. als Hardwarekomponenten auf einer Platine aufgelötet sein und über einen entsprechenden Bus und/oder Datenschnittstellen für das System 100 und/oder das Steuerungsmodul 110 zugreifbar sein.

Die Zeitgeber C umfassen beispielsweise jeweils eine Zeitgeberkonfiguration oder den jeweiligen Zeitgebern C ist eine entsprechende Zeitgeberkonfiguration zugeordnet. Der erste Zeitgeber C1 umfasst beispielsweise eine erste Zeitgeberkonfiguration S1, der zweite Zeitgeber C2 umfasst beispielsweise eine erste Zeitgeberkonfiguration S2, der dritte Zeitgeber C3 umfasst beispielsweise eine erste Zeitgeberkonfiguration S3 usw.

Zusätzlich umfassen die Zeitgeber C eine (Daten-)Schnittstelle, über die eine entsprechende Zeitinformation für eine Zeitsynchronisation einer der Applikationen A bereitgestellt werden kann. Je nach Implementierungsvariante wird diese Zeitinformation über eine der entsprechenden Schnittstellen an eine Applikation gesendet (z. B. durch das Steuerungsmodul 110 oder die Applikation selbst) oder die entsprechende Zeitinformation wird von einer der entsprechenden Applikationen und/oder dem Steuerungsmodul abgerufen. Entsprechend kann z. B. der erste Zeitgeber C1 eine erste Zeitinformation T1 z. B. über eine erste Schnittstelle bereitstellen. Entsprechend kann z. B. der zweite Zeitgeber C2 eine zweite Zeitinformation T2 z. B. über eine zweite Schnittstelle bereitstellen. Entsprechend kann z. B. der dritte Zeitgeber C3 eine dritte Zeitinformation T3 z. B. über eine dritte Schnittstelle bereitstellen.

Der erste Zeitgeber C1 kann beispielsweise mittels einer Datenverbindung zu einem NTP-Server (NTP: network time protocol) realisiert sein. Der zweite Zeitgeber C2 kann beispielsweise eine erste PTP Master Clock sein (PTP: precision time protocol). Der dritte Zeitgeber C3 kann beispielsweise eine zweite PTP Master Clock sein. Der vierte Zeitgeber kann beispielsweise mittels des Galileo OS (Open Service) implementiert sein. Der fünfte Zeitgeber C5 kann beispielsweise mittels Galileo PRS (Public Regulated Service) realisiert sein. Soll nun eine der Applikationen A durch das System 100 oder auf dem System 100 ausgeführt werden, so ist das Lademodul 110 zum Laden der ersten Applikation A1 eingerichtet, wobei die erste Applikation A1 die erste applikationsspezifische Zeitsynchronisationskonfiguration umfasst.

Das Steuerungsmodul 110 ist dazu eingerichtet, anhand der applikationsspezifischen Zeitsynchronisationskonfiguration (z. B. die erste applikationsspezifische Zeitsynchronizationskonfiguration) einen der Zeigeber C für eine der Applikationen A (z. B. für die erste Applikation) auszuwählen. Bei der Auswahl des Zeitgebers werden die Anforderungen der entsprechenden applikationsspezifischen Zeitsynchronisationskonfiguration einer Applikation (z. B. die applikationsspezifische Zeitsynchronisationskonfiguration der ersten Applikation) mit den Zeitgeberkonfigurationen der Zeitgeber C verglichen. Die Zeitgeberkonfiguration eines Zeitgebers gibt dabei an, welche Anforderungen ein entsprechender Zeitgeber erfüllen kann.

Bei der Auswertung bzw. Überüfung, ob einer der Zeitgeber C die entsprechende applikationsspezifische Zeitsynchronizationskonfiguration erfüllt, werden z. B. die Ergebnisse des Abgleichs zwischen den entsprechenden Zeitgeberkonfigurationen der Zeitgeber C und der applikationsspezifischen Zeitsynchronisationskonfiguration in einem Prüfergebnis gespeichert. Diese Überprüfung kann beispielsweise durch das Steuerungsmodul 110 selbst erfolgen oder unter zu Hilfenahme des Zugriffssteuerungsmoduls LCA erfolgen. Beispielsweise kann in Varianten des Systems 100 der Zugriff auf einen entsprechenden Zeitgeber Zugriffsbeschränkungen unterliegen. Diese Zugriffsbeschränkungen sind beispielsweise in einer Policy in dem Zugriffsregelspeichermodul CAP gespeichert. Für eine entsprechende Applikation kann beispielsweise die zugehörige applikationsspezifische Zeitsynchronisationskonfiguration entsprechende kryptographische Daten (z. B. digitale Signaturen, Zertifikate, Credentials, Passwörter) umfassen, die von dem Zugriffssteuerungsmodul LCA unter Berücksichtigung der Policy des Zugriffsregelspeichermoduls CAP ausgewertet werden. Können die korrekten kryptographischen Daten bereitgestellt werden, wird der Zugriff auf einen entsprechenden Zeitgeber oder mehrere Zeitgeber gewährt. Ob für entsprechende kryptographische Daten ein Zugriff auf einen oder mehrere Zeitgeber erlaubt wird, ist in der Policy gespeichert.

Erfüllt einer der Zeitgeber C die Anforderungen der applikationsspezifischen Zeitsynchronisationskonfiguration, so wird dies in dem Prüfergebnis gespeichert bzw. so ist dies dem Prüfergebnis zu entnehmen. Die Auswahl eines entsprechenden Zeitgebers (z. B. des ersten Zeitgebers C1) erfolgt dann anhand des Prüfergebnisses. Erfüllt keiner der Zeitgeber die Anforderung (was ebenfalls anhand des Prüfergebnisses feststellbar ist bzw. in diesem gespeichert ist), kann beispielsweise die entsprechende Applikation (z. B. die erste Applikation A1) nicht ausgeführt werden oder deren Ausführung wird unterbunden, falls z. B. während der Ausführung sich die Konfiguration eines Zeitgebers geändert hat oder ein Zeitgeber ausgefallen ist und kein geeigneter anderer Zeitgeber zur Verfügung steht. Auch ist es möglich, dass der Start einer Applikationen, beispielsweise bei einem Startvorgang (Booten) des Field Devices, erst dann erfolgt, wenn der Zeitgeber C die Anforderungen der applikationsspezifischen Zeitsynchronizationskonfiguration der Applikation erfüllt.

Erfüllen beispielsweise mehrere Zeitgeber die Anforderugen der applikationsspezifischen Zeitsynchronizationskonfiguration, so wird z. B. der Zeitgeber ausgewählt, der die applikationsspezifische Zeitsynchronisationskonfiguration am besten erfüllt. Es ist beispielsweise auch denkbar, dass in einem solchen Fall ein anderes Auswahlkriterium verwendet wird, wobei das entsprechende Auswahlkriterium z. B. in der applikationsspezifischen Zeitsynchronisationskonfiguration gespeichert ist. Ein solches Auswahlkriterium kann z. B. eine hohe zeitliche Präzision, geringer Energieverbrauch des Zeitgebers, eine hohe Ausfallsicherheit des Zeitgebers oder hohe Zuverlässigkeit des Zeitgebers sein. Diese entsprechenden Informationen sind ggf. in der Zeitgeberkonfiguration für eine Überprüfung bereitgestellt bzw. gespeichert. Auch diese Eigenschaften des Zeitgebers können beispielsweise in der applikationsspezifischen Zeitsynchronisationskonfiguration gespeichert sein. Eine Zeitsynchronisationskonfiguration kann weiterhin eine Information enthalten, welche die Reaktion angibt, wenn während der Ausführung der Applikation ein Zeitgeber C die Anforderungen der applikationsspezifischen Zeitsynchronisationskonfiguration nicht mehr erfüllt. Es kann dann z.B. der Applikation ein Signal oder eine Nachricht bereitgestellt werden, oder es kann die Applikation angehalten werden, bis der Zeitgeber C die Anforderungen der applikationsspezifischen Zeitsynchronisationskonfiguration wieder erfüllt, oder es kann die Applikation beendet werden. Konnte erfolgreich einer der Zeitgeber ausgewählt werden, wird mittels dieses ausgewählten Zeitgebers eine Zeitsynchronisation für eine Ausführung der ersten Applikation durchgeführt und/oder gesteuert.

Mit anderen Worten verfügt das System 100 über eine Mehrzahl von Host-lokalen Zeitinformationen, die z. B. über die Zeitgeber C bereitgestellt werden. Einer Applikation wird z. B. mit Hilfe der applikationsspezifischen Zeitsynchronisationskonfiguration die entsprechende zugeordnete Zeitinformation bereitgestellt (z.B. bei einem API Aufruf, bei Zuordnung eines Zeitstempels, einem Event/Message, das/die der App zugeordnet wird oder von dieser App stammt).

Die applikationsspezifische Zeitsynchronisationskonfiguration kann dabei z. B. folgende Anforderungen an einen entsprechenden Zeitgeber stellen:
- Zeitquelle (ID, Keys eines Zeitsynchronisationsservers; Zeitsynchronisationsquelle, z. B. ein GNSS-System und ggf. ein spezifischer Dienst eines GNSS-Systems (z. B. Galileo Open Service oder Galileo Public Regulated Service)
- Zeitbasis (Auswahl von mehreren Zeitbasen)
- Zeitsynchronisationsprotokoll (z.B. NTP, PTP)
- Genauigkeit der Synchronisation (z.B. bieten die Protokolle NTP und PTP eine unterschiedlich hohe Auflösung für die Synchronisation an)
- Kryptographische Schutzstufe des Zeitsynchronisationsprotokolls

Die entsprechende Zeitgeberkonfiguration eines Zeitgebers umfasst analoge Informationen, die die Eigenschaften des Zeitgebers hinsichtlicher der Anforderungen der applikationsspezifischen Zeitsynchronisationskonfiguration angeben.

Das System 100 kann dabei beispielsweise ein App-enabled Device (z.B. Feldgerät, Steuergerät, Überwachungsgerät, IoT-Device, Edge Cloud Device, Cloud Server, App-enabled Time Server) sein.

Bei den Applikationen kann es sich um Applikationen zur Ausführung eines Steuerungsalgorithmus für ein technisches System (z. B. Energieversorgungsnetz, Kraftwerksanlage), Überwachung eines technischen Systems oder zur Diagnose eines technischen Systems handeln. Alternativ oder zusätzlich handelt es sich bei der Applikation um eine zeitsynchronisierte Applikation.

Wie in Fig. 1 gezeigt, verwaltet das Steuerungsmodul z. B. mehrere Zeitgeber (z. B. lokale Uhren). Dies ermöglicht, dass unterschiedliche Zeitinformationen mit jeweils unterschiedlichen Zeitquellen (z. B. NTP-Server, PTP Master Clock, Galileo Open Service, Galileo PRS) synchronisiert sein können. Sie können z. B. auf eine Absolutzeit oder auf eine geräteübergreifende relative Zeitinformation synchronisiert sein. Entsprechend kann z. B. ein entsprechender Zeitgeber beispielsweise eine entsprechende Zeitquelle sein oder ein entsprechender Zeitgeber eine entsprechende Zeitquelle umfassen.

Es können jeweils unterschiedliche Zeitquellen und Zeitsynchronisationsprotokolle für einen Zeitgeber verwendet werden, wobei entsprechende Anforderungen an die Zeitsynchronisation einer Applikation in den entsprechenden applikationsspezifischen Zeitsynchronisationskonfigurationen gespeichert sind.

Auch kann eine lokale Zeit verwendet werden, z. B. ein Zeitgeber umfasst eine batteriegepufferte Real Time Clock (RTC) oder eine Atomuhr (Chip-Scale Atomic Clock CSAC) oder der entsprechende Zeitgeber ist als eine batteriegepufferte Real Time Clock (RTC) oder eine Atomuhr (Chip-Scale Atomic Clock CSAC) ausgebildet.

Eine Policy des Zugriffsregelspeichermoduls CAP gibt z. B. dabei vor, welche der Zeitgeber (z. B. mehreren lokalen Uhren) einer Applikation bereitgestellt werden dürfen. Welcher Zeitgeber einer Applikation die entsprechenden Zeitinformationen bereitstellt, wird vorzugsweise bei der Installation der Applikation z. B. abhängig von Metadaten (z. B. Hashwert der Applikation, Hersteller der Applikation, Zweck der Applikation) der Applikation festgelegt. Es ist jedoch auch möglich, dass eine Applikation zur Laufzeit durch API-Aufrufe einen Zeitgeber auswählen kann. Dies kann beispielsweise abhängig von den aktuell notwendigen Anforderungen für die erste Applikation erfolgen.

In einer Variante wird ein weiterer Zeitgeber (z. B. eine weitere lokale Uhr) durch Installation einer Applikation realisiert. Eine solche Applikation nutzt nicht einen vom Steuerungsmodul 110 (z. B. einem Runtime Environment) bereitgestellten Zeitgeber (z. B. eine lokale Uhr), sondern eine Applikation realisiert eine lokale Uhr.

Das System 100 kann beispielsweise zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Mit der Erfindung kann z. B. ein System zum Ausführen einer Applikation realisiert werden, wobei mittels der applikationsspezifischen Zeitsynchronisationskonfiguration der Applikation spezifisch für die Applikation ein entsprechender Zeitgeber ausgewählt wird, um für eine Ausführung der Applikation eine Zeitsynchronisation zu realisieren. Dies ist insbesondere vorteilhaft, wenn die Applikation eine zeitsynchronisierte Applikation ist.

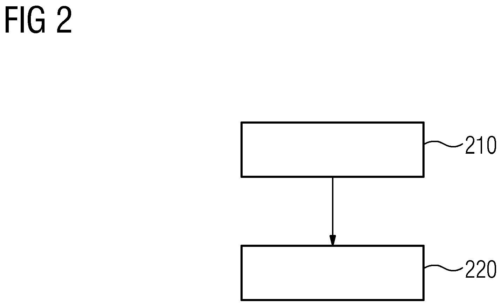

Die Fig. 2 zeigt ein weiteres Ausführungsbeispiel der Erfindung als Ablaufdiagramm für ein Verfahren dargestellt.

Im Einzelnen ist ein computerimplementiertes Verfahren zum Ausführen einer Applikation dargestellt.

Das Verfahren umfasst einen ersten Verfahrensschritt 210 zum Laden einer ersten Applikation, wobei der ersten Applikation eine erste applikationsspezifische Zeitsynchronisationskonfiguration zugeordnet ist und/oder die erste Applikation die erste applikationsspezifische Zeitsynchronisationskonfiguration umfasst.

Das Verfahren umfasst einen zweiten Verfahrensschritt 220 zum Auswählen eines Zeitgebers anhand der ersten applikationsspezifischen Zeitsynchronisationskonfiguration, wobei mittels des ausgewählten Zeitgebers eine Zeitsynchronisation für eine Ausführung der ersten Applikation durchgeführt und/oder gesteuert wird.

Bei einem weiteren nicht in einer Figur dargestellten Ausführungsbeispiel wird der ausgewählte Zeitgeber abhängig von der applikationsspezifischen Zeitsynchronisationskonfiguration rekonfiguriert.

Ein weiteres nicht in einer Figur dargestelltes Ausführungsbeispiel betrifft ein System aufweisend:
- beispielsweise ein Lademodul, wobei
   ∘ beispielsweise das Lademodul zum Laden einer ersten Applikation eingerichtet ist,
   ∘ beispielsweise der ersten Applikation eine erste applikationsspezifische Zeitsynchronisationskonfiguration zugeordnet ist und/oder die erste Applikation die erste applikationsspezifische Zeitsynchronisationskonfiguration umfasst;
- beispielsweise ein Zeitgeber oder beispielsweise mehrere Zeitgeber;
- beispielsweise ein Steuerungsmodul, wobei
   ∘ beispielsweise das Steuerungsmodul dazu eingerichtet ist, dass anhand der ersten applikationsspezifischen Zeitsynchronisationskonfiguration einer der Zeigeber ausgewählt wird,
   ∘ beispielsweise das Steuerungsmodul dazu eingerictet ist, mittels des ausgewählten Zeitgebers eine Zeitsynchronisation für eine Ausführung der ersten Applikation durchzuführen und/oder zu steuern.

Ein weiteres nicht in einer Figur dargestelltes Ausführungsbeispiel betrifft ein System zum Ausführen einer ersten Applikation und einer zweiten Applikation aufweisend:
- ein Lademodul, wobei
   ∘ das Lademodul zum Laden einer ersten Applikation und/oder einer zweiten Applikation eingerichtet ist,
   ∘ der ersten Applikation eine erste applikationsspezifische Zeitsynchronisationskonfiguration zugeordnet ist und/oder die erste Applikation die erste applikationsspezifische Zeitsynchronisationskonfiguration umfasst,
   ∘ beispielsweise die erste applikationsspezifische Zeitsynchronisationskonfiguration Anforderungen für eine Ausführung der ersten Applikation vorgibt,
   ∘ beispielsweise die Anforderungen vorgeben, auf welcher Zeitbasis und/oder mit welcher Genauigkeit eine Zeitsynchronisation bei einer Ausführung der ersten Applikation erfolgen soll;
   ∘ beispielsweise der zweiten Applikation eine zweite applikationsspezifische Zeitsynchronisationskonfiguration zugeordnet ist und/oder die zweite Applikation die zweite applikationsspezifische Zeitsynchronisationskonfiguration umfasst,
   ∘ beispielsweise die zweite applikationsspezifische Zeitsynchronisationskonfiguration Anforderungen für eine Ausführung der zweiten Applikation vorgibt,
   ∘ beispielsweise die Anforderungen vorgeben, auf welcher Zeitbasis und/oder mit welcher Genauigkeit eine Zeitsynchronisation bei einer Ausführung der zweiten Applikation erfolgen soll;
- mehrere Zeitgeber, die beispielsweise jeweils eine Zeitgeberkonfiguration umfassen;
- ein Steuerungsmodul, wobei
   ∘ das Steuerungsmodul dazu eingerichtet ist, dass anhand der ersten applikationsspezifischen Zeitsynchronisationskonfiguration einer der Zeitgeber (z. B. ein erster Zeitgeber) ausgewählt wird,
   ∘ das Steuerungsmodul dazu eingerichtet ist, mittels des ausgewählten Zeitgebers eine Zeitsynchronisation für eine Ausführung der ersten Applikation durchzuführen und/oder zu steuern,
   ∘ beispielsweise beim Auswählen des Zeitgebers anhand der ersten applikationsspezifischen Zeitsynchronisationskonfiguration die Zeitgeberkonfiguration berücksichtigt wird.
   ∘ das Steuerungsmodul dazu eingerichtet ist, dass anhand der zweiten applikationsspezifischen Zeitsynchronisationskonfiguration ein weiterer der Zeitgeber (z. B. ein zweiter Zeitgeber) ausgewählt wird,
   ∘ beispielsweise das Steuerungsmodul dazu eingerichtet ist, mittels des ausgewählten weiteren Zeitgebers eine Zeitsynchronisation für eine Ausführung der zweiten Applikation durchzuführen und/oder zu steuern,
   ∘ beispielsweise beim Auswählen des weiteren Zeitgebers anhand der zweiten applikationsspezifischen Zeitsynchronisationskonfiguration die Zeitgeberkonfiguration berücksichtigt wird.

Ein weiteres nicht in einer Figur dargestelltes Ausführungsbeispiel betrifft ein System zum Ausführen einer Applikation oder mehrerer Applikationen aufweisend:
- ein Lademodul, wobei
   ∘ das Lademodul zum Laden einer ersten Applikation und/oder weiterer Applikationen eingerichtet ist,
   ∘ der ersten Applikation eine erste applikationsspezifische Zeitsynchronisationskonfiguration zugeordnet ist und/oder den weiteren Applikationen jeweils weitere Zeitsynchronisationskonfigurationen zugeordnet sind, und/oder
   ∘ die erste Applikation und/oder die weiteren Applikationen die erste oder die entsprechenden weiteren applikationsspezifischen Zeitsynchronizationskonfiguration umfassen;
- einen Zeitgeber oder mehrere Zeitgeber;
- ein Steuerungsmodul, wobei
   ∘ das Steuerungsmodul dazu eingerichtet ist, dass anhand der ersten oder der weiteren applikationsspezifischen Zeitsynchronisationskonfiguration einer der Zeitgeber ausgewählt wird,
   ∘ beispielsweise der entsprechende Zeitgeber spezifisch für die entsprechende Applikation anhand der entsprechenden applikationsspezifischen Zeitsynchronisationskonfiguration ausgewählt wird,
   ∘ beispielsweise das Steuerungsmodul dazu eingerichtet ist, mittels des ausgewählten Zeitgebers eine Zeitsynchronisation für eine Ausführung der ersten oder der weiteren Applikation durchzuführen und/oder zu steuern.

Ein weiteres nicht in einer Figur dargestelltes Ausführungsbeispiel betrifft ein computerimplementiertes Verfahren zum Ausführen einer Applikation oder mehrerer Applikationen mit den Verfahrensschritten:
- Laden einer ersten Applikation oder weiterer Applikationen, wobei
   ∘ der ersten Applikation oder weiteren Applikationen jeweils eine applikationsspezifische Zeitsynchronisationskonfiguration zugeordnet ist (z. B. ist der ersten Applikation eine erste applikationsspezifische Zeitsynchronisationskonfiguration zugeordnet und/oder den weiteren Applikationen sind die weitere applikationsspezifische Zeitsynchronisationskonfigurationen zugeordnet) und/oder die erste Applikation oder weitere Applikationen die erste oder weitere applikationsspezifische Zeitsynchronisationskonfiguration umfasst;
- Auswählen eines Zeitgebers anhand der ersten oder weiteren applikationsspezifischen Zeitsynchronisationskonfiguration, wobei mittels des ausgewählten Zeitgebers eine Zeitsynchronisation für eine Ausführung der ersten Applikation oder einer weiteren Applikation durchgeführt und/oder gesteuert wird.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. System zum Ausführen einer Applikation aufweisend:
- ein Lademodul, wobei
∘ das Lademodul zum Laden einer ersten Applikation eingerichtet ist,
∘ der ersten Applikation eine erste applikationsspezifische Zeitsynchronisationskonfiguration zugeordnet ist und/oder die erste Applikation die erste applikationsspezifische Zeitsynchronizationskonfiguration umfasst;
- einen Zeitgeber oder mehrere Zeitgeber;
- ein Steuerungsmodul, wobei
∘ das Steuerungsmodul dazu eingerichtet ist, dass anhand der ersten applikationsspezifischen Zeitsynchronizationskonfiguration einer der Zeigeber ausgewählt wird,
∘ das Steuerungsmodul dazu eingerictet ist, mittels des ausgewählten Zeitgebers eine Zeitsynchronisation für eine Ausführung der ersten Applikation durchzuführen und/oder zu steuern.

2. System nach einem der vorhergehenden Ansprüche, wobei die erste und/oder weitere applikationsspezifische Zeitsynchronisationskonfigurationen für die Zeitsynchronisation
- eine zu verwendende Zeitquelle und/oder
- ein Zeitsynchronisationsprotokoll und/oder
- eine Genauigkeit der Zeitsynchronisation und/oder
- eine kryptographische Schutzstufe des Zeitsynchronisationsprotokolls
vorgibt.

3. System nach einem der vorhergehenden Ansprüche, wobei
- die erste und/oder weitere applikationsspezifische Zeitsynchronisationskonfigurationen eine Applikationskontextkonfiguration umfasst.

4. System nach einem der vorhergehenden Ansprüche, insbesondere dem Anspruch 3, wobei die Applikationskontextkonfiguration vorgibt, in welchem Kontext die erste applikationsspezifische Zeitsynchronisationskonfiguration verwendet wird.

5. System nach einem der vorhergehenden Ansprüche, wobei
- die erste und/oder weitere applikationsspezifische Zeitsynchronisationskonfigurationen eine Zeitgeberkonfiguration umfasst,
- beispielsweise die Zeitgeberkonfiguration einen der Zeitgeber des Systems konfiguriert oder erzeugt,
- beispielsweise der konfigurierte oder erzeugte Zeitgeber spezifisch für die erste Applikation oder weitere Applikationen erzeugt wurde.

6. System nach einem der vorhergehenden Ansprüche, wobei
- das System ein Zeitkorrekturmodul umfasst,
- beispielsweise das Zeitkorrekturmodul dazu eingerichtet ist, der ersten Applikation einen systemspezifischen Zeitkorrekturwert bereitzustellen,
- beispielsweise der systemspezifische Zeitkorrekturwert spezifisch für das System berechnet wird, und/oder
- beispielsweise der systemspezifische Zeitkorrekturwert spezifisch für einen oder mehrere der Zeitgeber berechnet wird.

7. System nach einem der vorhergehenden Ansprüche, wobei
- das System ein Kommunikationsmodul umfasst,
- beispielsweise das Kommunikationsmodul dazu eingerichtet ist, ein Prüfergebnis abhängig davon zu berechnen, ob die erste applikationsspezifische Zeitsynchronisationskonfiguration und mindestens eine zweite applikationsspezifische Zeitsynchronisationskonfiguration einer mindestens zweiten Applikation kompatibel sind,
- beispielsweise das Kommunikationsmodul dazu eingerichtet ist, abhängig von dem Prüfergebnis eine Kommunikationsverbindung zwischen der ersten Applikation und der mindestens zweiten Applikation aufzubauen.

8. System nach einem der vorhergehenden Ansprüche, wobei
- das Steuerungsmodul die erste Applikation oder weitere Applikationen ausführt, wenn die Anforderungen der ersten applikationsspezifischen Zeitsynchronisationskonfiguration oder weiterer applikationsspezifischer Zeitsynchronisationskonfigurationen für die erste Applikation und/oder weitere Applikationen eingehalten werden,
- beispielsweise während der Ausführung der ersten Applikation die Anforderungen wiederholt überprüft werden,
- beispielsweise für das wiederholte Überprüfen der Anforderungen ein Prüfergebnis ermittelt wird,
- beispielsweise abhängig von diesem Prüfergebnis eine fortgesetzte Ausführung der ersten Applikation gesteuert wird.

9. Computerimplementiertes Verfahren zum Ausführen einer Applikation mit den Verfahrensschritten:
- Laden einer ersten Applikation, wobei
∘ der ersten Applikation eine erste applikationsspezifische Zeitsynchronisationskonfiguration zugeordnet ist und/oder die erste Applikation die erste applikationsspezifische Zeitsynchronizationskonfiguration umfasst;
- Auswählen eines Zeitgebers anhand der ersten applikationsspezifischen Zeitsynchronizationskonfiguration, wobei mittles des ausgewählten Zeitgebers eine Zeitsynchronisation für eine Ausführung der ersten Applikation durchgeführt und/oder gesteuert wird.

10. Computerprogrammprodukt mit Programmbefehlen zur Durchführung des Verfahrens nach Anspruch 9.

11. Bereitstellungsvorrichtung für das Computerprogrammprodukt nach Anspruch 10, wobei die Bereitstellungsvorrichtung das Computerprogrammprodukt speichert und/oder bereitstellt.
